# EUROPÄISCHE PATENTSCHRIFT

(11) **EP 0 322 676 B1**
(45) Veröffentlichungstag und Bekanntmachung des Hinweises auf die Patenterteilung: **10.02.1993**
(21) Anmeldenummer: 88121066.0
(22) Anmeldetag: 16.12.1988
(51) Int. Cl.: G01B 11/00

(54) **Verfahren und Einrichtung zur Regelung der Emissionslichtmenge in einem optischen Tastkopf**
Process and device to regulate the emission intensity of light in an optical measuring probe
Procédé et dispositif pour régler l'intensité lumineuse émise par un palpeur optique

(30) Priorität: 21.12.1987 DE 3743363
(43) Veröffentlichungstag der Anmeldung: 05.07.1989
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Nägele, Ulrich, D-7070 Schwäbisch Gmünd 6 (DE); Ballmer, Host, D-7920 Heidenheim (DE); Kammleiter, Berndt, D-7082 Oberkochen (DE); Koch, Klaus-Peter, Dr., D-7080 Aalen (DE)

(56) Entgegenhaltungen:
- EP-A- 0 152 525
- EP-A- 0 156 991
- WO-A-81/02628
- WERKSTATTSTECHNIK. ZEITSCHRIFT FÜR INDUSTRIELLE FERTIGUNG, vol. 76, nr. 8, Aug. 1986: "Möglichkeiten der Bildverarbeitung in der Koordinatenmesstechnik" durch H.J. WARNECKE u.a. S. 461-466
- MESSEN, PRÜFEN, AUTOMATISIEREN, 118 (1985) Apr., No. 4: "Lambda - ein Lasermessverfahren" durch V. Bodlaj, S. 158-164
- REVIEW OF SCIENTIFIC INSTRUMENTS, vol. 55, (1984) nr. 8, Aug. 1984: "High-resolution light spot localization with photodiode arrays" durch D. Bertani u.a. S. 1270-1272

## Beschreibung

Die in der Längenmeßtechnik heute verwendeten optischen Abstandsmeßsysteme arbeiten in der Regel nach dem Triangulationsprinzip, d.h. sie bestehen aus einer Lichtquelle, die einen Meßstrahl auf das zu vermessende Objekt richtet, und einer Empfangsoptik, deren Achse zur Strahlachse geneigt angeordnet ist. In solchen Abstandsmeßsystemen, die häufig auch als "optischer Tastkopf" bezeichnet werden, werden hauptsächlich Laserdioden als Strahlquellen verwendet und als Empfänger benutzt man entweder positionsempfindliche Photodioden mit nachfolgender analoger Signalverarbeitung oder Empfängerzeilen, die aus einer Vielzahl nebeneinander angeordneter Einzelelemente bestehen wie z.B. Diodenarrays oder sogenannte CCD-Arrays.

Insbesondere bei Empfängern des erstgenannten Typs tritt das Problem auf, daß die Meßgenauigkeit von der Intensität des Meßlichtes abhängt, den der Empfänger von der Werkstückoberfläche zurückerhält. Da die Intensität des empfangenen Lichtes jedoch sehr stark von der Oberflächenbeschaffenheit des zu vermessenden Werkstückes abhängt, muß über eine Regelung der Intensität der Strahlquelle versucht werden, den Pegel des empfangenen Meßlichtes konstant zu halten. Optische Tastköpfe, die eine solche Regeleinrichtung besitzen sind beispielsweise aus der DE-A-31 47 129, der DE-A-31 19 505, der DE-C-31 51 800, US-A-36 12 890 und der EP-B-0 047 250 bekannt.

In den bekannten Tastköpfen wird die Regelung nun so vorgenommen, daß die Intensität des von der Strahlquelle emittierten Lichtes entweder über den Strom der Lichtquelle oder die Durchlässigkeit eines der Lichtquelle vorgeschalteten, elektrooptischen Modulators gesteuert wird.

Insbesondere dann, wenn Laser als Strahlquelle verwendet werden, sind dieser Art der Regelung jedoch in Bezug auf den erzielbaren Dynamikbereich Grenzen gesetzt. Denn die nichtlineare Strom/Leistungskennlinie von Laserdioden erlaubt nur geringe Abweichungen vom optimalen Arbeitspunkt, an dem die Laserdiode zu betreiben ist. Außerdem ändert sich die Abstrahlcharakteristik von Laserdioden und damit das Strahlprofil bei einer Änderung des Betriebsstromes. Im unteren Leistungsbereich besitzen Laserdioden gegenüber Gaslasern außerdem einen hohen Untergrundanteil der spontanen Emission. Die beiden letztgenannten Effekte wirken sich ebenfalls negativ auf die Meßgenauigkeit aus, wenn mit Stromregelung gearbeitet wird.

Es ist weiterhin bekannt, die Lichtquellen in den vorstehend genannten Tastköpfen zu modulieren. Hierbei ist die Periodendauer der Frequenz jedoch konstant, denn die Modulation der Lichtquelle dient allein dazu, in Verbindung mit einem entsprechenden Nachweis auf der Modulationsfrequenz konstante Störlichtpegel zu unterdrücken, die andernfalls das Meßergebnis verfälschen würden.

Es ist die Aufgabe der vorliegenen Erfindung ein Verfahren und eine Einrichtung zur Regelung der Emissionslichtmenge der Strahlquelle in einem optischen Tastkopf anzugeben, mit dem sich möglichst hohe Dynamikbereiche erzielen lassen und das die vorstehend genannten Nachteile beseitigt.

Diese Aufgabe wird gemäß den kennzeichnenden Merkmalen des Anspruch 1 dadurch gelöst, daß die Strahlquelle gepulst betrieben wird und die Anpassung der Lichtmenge an die Oberflächenbeschaffenheit der auszumessenden Probe (Werkstück 5) durch Steuerung der Pulsdauer erfolgt.

Mit dieser Art der Regelung läßt sich ein Dynamikbereich von 10⁴ ohne weiteres erreichen. Da nicht die Amplitude des emittierten Lichtes bzw. der Strom der Lichtquelle geregelt, sondern ihre Einschaltdauer für die Regelung variiert wird, kann die Strahlquelle immer im optimalen Arbeitsbereich ihrer Kennlinie betrieben werden, was sich positiv auf die Meßgenauigkeit und die Lebensdauer der Strahlquelle auswirkt.

Die erfindungsgemäße Art der Intensitätsregelung eignet sich deshalb besonders in Verbindung mit einer Laserdiode als Strahlquelle. Als Empfänger werden zweckmäßig aus einer Vielzahl von Einzelelementen bestehende segmentierte Diodenzeilen oder sogenannte CCD-Arrays benutzt. Derartige Empfänger zeigen ein integrierendes Verhalten in Bezug auf die zwischen den Auslesezyklen empfangene Lichtmenge und sind deshalb in Verbindung mit einer Lichtmengenregelung über die Pulsdauer besonders geeignet.

Wenn der Tastkopf, der die erfindungsgemäße Regeleinrichtung enthält, an einem Koordinatenmeßgerät betrieben wird, dann ist es zweckmäßig, die Pulsfrequenz der Strahlquelle mit dem Zeittakt des Koordinatenmeßgerätes zu synchronisieren. Gleiches gilt für den Auslesetakt, mit dem der photoempfindliche Empfänger des Tastkopfes betrieben wird, dessen Signale ja die Abstandsmeßwerte des Tastkopfes darstellen. Die gegenseitige Synchronisation stellt sicher, daß die Meßwerte von Koordinatenmeßgerät und Tastkopf zum gleichen Zeitpunkt gewonnen werden, so daß Schleppfehler vermieden werden.

In diesem Zusammenhang spielt die Art der Synchronisation der Pulsfolge, die die Strahlungsquelle aussendet, eine besondere Rolle. Denn wenn lediglich die Einschaltflanken der Steuerimpulse für die Strahlungsquelle mit dem Systemtakt des Koordinatenmeßgerätes synchronisiert werden, kann im Scanningbetrieb, d.h. beim kontinuierlichen Abtasten geneigter Oberflächen ein Hystereseeffekt auftreten, der zudem abhängig von der entsprechend der Werkstückoberflächenbeschaffenheit gewählten Zeitdauer der Lichtimpulse ist. Dieser Hystereseeffekt äußert sich darin, daß man unterschiedliche Meßwerte für den Abstand des Werkstücks erhalt, je nachdem ob man vom Werkstück weg- oder auf das Werkstück zufährt. Zusätzlich ist dieser Hystereseeffekt auch noch von der Fahrgeschwindigkeit bzw. Relativgeschwindigkeit zwischen Tastkopf und Werkstück abhängig.

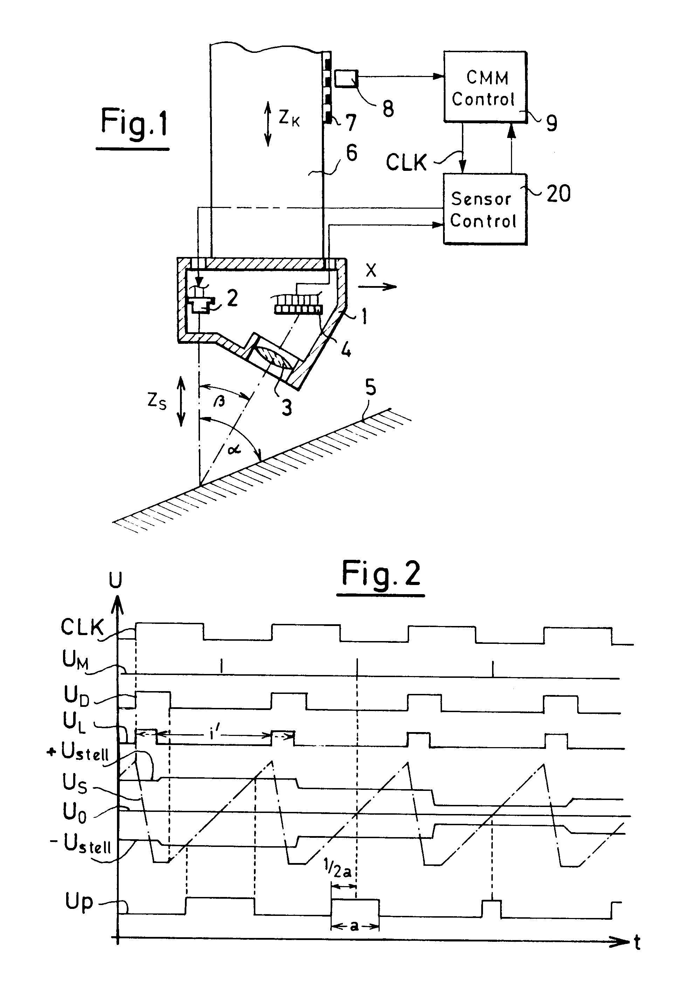

In einer vorteilhaften Weiterbildung der Erfindung läßt sich dieser Effekt verhindern, wenn eine konstante Phasenbeziehung zwischen den Schwerpunkten der einzelnen Impulse der Strahlquelle und dem Zeittakt des Koordinatenmeßgerätes hergestellt wird. Dies kann dadurch erreicht werden, daß die Anstiegs- und die Abfallflanke der Steuerimpulse für die Lichtquelle bei einer Änderung der Pulslänge symmetrisch zeitlich vorgezogen bzw. verzögert wird, so daß zum Zeitpunkt der Meßwertübernahme durch das Koordinatenmeßgerät gerade die halbe Pulsdauer verstrichen ist. Dies wird noch detaillierter in einem Ausführungsbeispiel anhand der Figuren 1-3 der beigefügten Zeichnungen näher erläutert:
- Figur 1: Ist eine vereinfachte Prinzipskizze, die einen am Meßarm eines Koordinatenmeßgerätes befestigten optischen Tastkopf zeigt;
- Figur 2: ist ein Diagramm, daß den zeitlichen Ablauf verschiedener Signale der Steuerschaltung (20) des optischen Tastkopfes aus Figur 1 darstellt;
- Figur 3: ist ein Prinzipschaltbild der Sensorelektronik (20) aus Figur 1.

In Figur 1 ist ein nach dem Triangulationsprinzip arbeitender optischer Tastkopf dargestellt, der am Meßarm (6) eines Koordinatenmeßgerätes befestigt ist. Das gesamte Koordinatenmeßgerät ist nicht dargestellt, ensprechende Ausführungen hierzu finden sich beispielsweise in der US-A-4 587 622.
Lediglich ein Teil des Maßstabs (7), der die Verschiebung des Tastkopfes am Meßarm (6) in der Vertikalen mißt, und der zugehörige photoelektrische Lesekopf (8) sind zum besseren Verständnis dargestellt. Der Lesekopf (8) ist ebenso wie die nicht gezeigten Meßsysteme zur Messung der Verschieberichtung in den beiden übrigen Koordinaten X und Y an die Steuerung (9) des Koordinatenmeßgerätes angeschlossen.

Der optische Tastkopf (1) besteht im wesentlichen aus einer Strahlquelle (2) in Form einer Laserdiode und einer Empfangsoptik (3), hinter der ein aus einer Vielzahl von Einzelelementen bestehender photoelektrischer Empfänger (4) angeordnet ist. Als Empfänger kann beispielsweise die Photodiodenzeile Typ Nr. RL 0256 S der Firma EG & G Reticon verwendet sein.

Wie durch den mit β bezeichneten Pfeil angedeutet ist sind die Strahlachse der Laserdiode (2) und die optische Achse der Nachweisoptik (3) zueinander geneigt. Demzufolge verschiebt sich die Lage des von der Optik (3) auf die Diodenzeile (4) abgebildeten Lichtflecks, den die Laserdiode (2) auf die Oberfläche des Werkstücks (5) projiziert, abhängig von der Entfernung zwischen Tastkopf (1) und Werkstück (5). Das entsprechende Meßsignal der Diodenzeile (4) wird nach Signalaufbereitung in einer Elektronikeinheit (20) ebenfalls an die Steuerung des Koordinatenmeßgerätes weitergegeben. Die Steuereinheit (20) liefert außerdem das Signal U_{P} (siehe Figur 2), das eine Konstantstromquelle zur Versorgung der Laserdiode (2) schaltet.

Die Steuerschaltung (20) ist mit dem Systemtakt aus der Steuerung (9) des Koordinatenmeßgerätes synchronisiert, was durch den mit CLK bezeichneten Pfeil in Figur 1 veranschaulicht wird.

In Figur 2 ist der Systemtakt CLK als Rechteckimpulsfolge dargestellt. Darunter ist die vom Systemtakt abgeleitete Pulsfolge U_{M} gezeichnet. Die Impulse U_{M} definieren den Zeitpunkt, zu dem die von den Maßstäben in den Verschiebeachsen des Koordinatenmeßgerätes abgegebenen Meßwerte gewonnen werden.

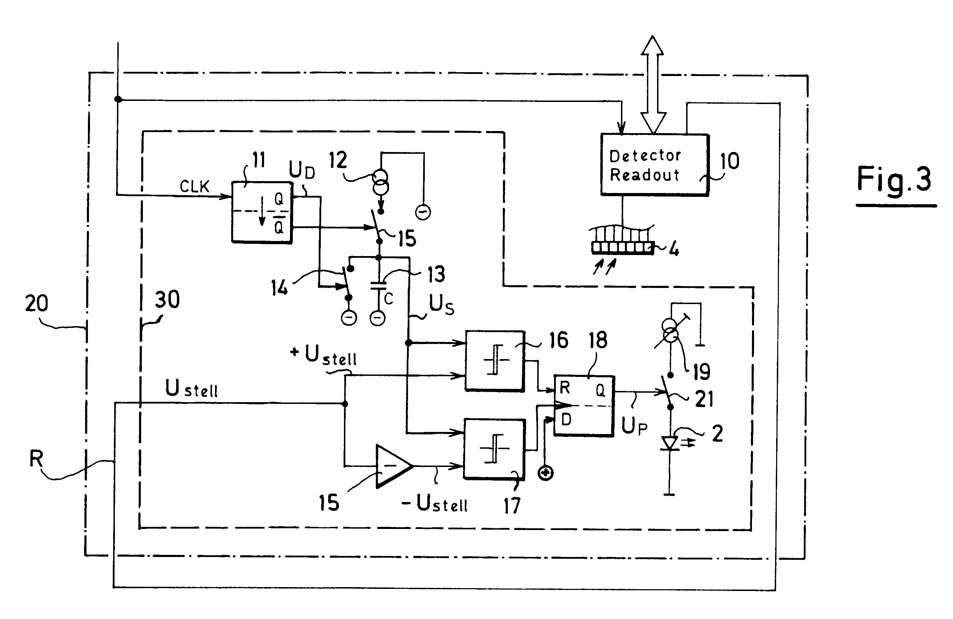

Der mit U_{L} bezeichnete Kurvenzug stellt den Lesezyklus dar, mit dem die Diodenzeile (4) von der in Figur 3 mit (10) bezeichneten Steuerschaltung betrieben wird. Die Phasenverschiebung zwischen dem Lesetakt der Diodenzeile und dem Maschinentakt CLK ist so gewählt, daß der Zeitpunkt, zu dem die Impulse U_{M} des Zählerstrobes auftreten, mitten in den verbleibenden freien Teil i′ der Integrationszeit der photoempfindlichen Flächen des Sensors (4) fallen.

Zur Regelung der Lichtintensität der Laserdiode (2) ist der Ausgang der Ausleseschaltung (10) für die Diodenzeile (4), der ein Signal abgibt, das der von der Diodenzeile (4) empfangene Lichtintensität proportional ist, über die Leitung R mit dem Eingang einer Steuerschaltung (30) verbunden. Die Steuerschaltung (30) erzeugt die in Figur 2 zu unterst dargestellte und mit U_{P} bezeichnete Pulsfolge, wobei die Dauer a der Einzelimpulse U_{P} der Ausgangsspannung Uₛₜₑₗₗ auf der Leitung R proportional sind.

Würde man nun die Synchronisation zwischen den Beleuchtungsimpulsen U_{P}, mit denen die Laserdiode (2) abstrahlt, auf die gleiche Weise vornehmen wie die Synchronisation zwischen dem Lesetakt U_{L} der Diodenzeile und dem Maschinentakt CLK, indem allein eine konstante Phasenverschiebung zwischen den Anstiegsflanken der Pulsfolgen hergestellt wird, dann treten im Scanningbetrieb, d.h. wenn der Tastkopf (1) kontinuierlich gegenüber dem Werkstück (5) bewegt wird, Meßfehler auf. Dies läßt sich anhand von Figur 1 folgendermaßen erklären:
Bei einer Relativbewegung des Tastkopfes (1) in Richtung der Meßrichtung Z_{S} verschiebt sich die Lage des Bildes des Meßspots auf der Diodenzeile (4) abhängig von der Höhe der Relativgeschwindigkeit zwischen Tastkopf (1) und Werkstück (5). Die Elemente der Diodenzeile (4) integrieren nun die während eines Meßzyklus empfangene Lichtmenge und aus den einzelnen Diodensignalen wird durch Datenreduktion ein Messwert generiert. Bei phasenstarrer Ankopplung der Startflanken der Lichtimpulse an den Systemtakt verschiebt sich die Lage des abgebildeten Meßspots auf der Diodenzeile (4) abhängig von dem Weg, den der Tastkopf relativ zum Werkstück während der Zeitdauer zurücklegt, in der die Laserdiode (2) Licht aussendet. Dieser Schleppfehler ist wie schon gesagt von der Fahrgeschwindigkeit und der Pulsdauer a der Lichtimpulse der Diode (2) abhängig. Wenn beispielsweise eine unter 45° zur Fahrtrichtung X geneigte Oberfläche mit einer Geschwindigkeit von 40 mm/sec. abgetastet wird, und sich über die Lichtmengenregelung der Laserdiode (2) die Pulslänge um 2,5 ms ändert, dann kann ein Meßfehler von 0,1 mm auftreten. Derartige Meßfehler sind bei Koordinatenmeßgeräten, die eine Meßunsicherheit im Bereich von wenigen Mikrometern haben soll, nicht tolerierbar.

Zur Vermeidung dieses Fehlers arbeitet die in Figur 3 skizzierte Regelschaltung (30) so, daß auch bei variabler Pulslänge jeweils die Mitte der Lichtimpulse der Laserdiode (2) mit den Impulsen U_{M} des Zählerstrobes zusammenfällt. Dies wird folgendermaßen erreicht:
Vom Systemtakt CLK wird in der Schaltung (30) ein Sägezahngenerator gestartet, der eine zur Spannung U_{O} symmetrische, zeitlinear ansteigende Spannung U_{S} liefert. Der Sägezahngenerator ist vereinfacht dargestellt und besteht aus einer Stromquelle (12) und einem Kondensator (13), der zyklisch von einem Zeitgeber (11) gesteuert über den Schalter (15) aufgeladen und über den Schalter (14) kurzgeschlossen wird. Die Schaltpulse am Ausgang des Zeitgebers (11) sind in Figur 2 mit U_{D} bezeichnet. Die Sägezahnspannung U_{S} ist an die Eingänge zweier Komparatoren (16 und 17) gelegt.

An den zweiten Eingang des Komparators (16) ist die Steuerspannung Uₛₜₑₗₗ gelegt, die aus der von der Diodenzeile empfangenen Lichtmenge abgeleitet ist. Dem zweiten Eingang des zweiten Komparators (17) ist die über den Invertierer (15) invertierte, negative Steuerspannung -Uₛₜₑₗₗ gelegt. Die beiden Komparatoren (16 und 17) schalten jeweils dann durch, wenn die Sägezahnspannung U_{S} und die beiden Steuerspannungen Uₛₜₑₗₗ und -Uₛₜₑₗₗ gleich sind.

Die Ausgänge der beiden Komparatoren (16 und 17) sind einem Flip-Flop (18) zugeführt, wobei die positive Flanke des vom Komparator (17) erzeugten Pulses das Flip-Flop (18) durchschaltet und die positive Flanke des vom Komparator (16) erzeugten Pulses das Flip-Flop (18) wieder zurücksetzt. Auf diese Weise liefert das Flip-Flop (18) am Ausgang Impulse U_{P}, deren Start- und Stopflanke auch bei unterschiedlicher Pulslänge immer symmetrisch zu dem Zeitpunkt liegen, zu dem die Sägezahnspannung U_{S} die Spannung U_{O} schneidet.

Mit diesen Impulsen U_{P} wird die Stromquelle (19) für die Laserdiode (2) über den vereinfacht als Schalter (21) gezeigten Steuertransistor durchgeschaltet. Die Stromquelle (19) ist optimal auf die Kennlinie der Laserdiode (2) eingestellt, die somit immer im günstigsten Arbeitsbereich betrieben wird.

Mit den beschriebenen Maßnahmen wird erreicht, daß der Mittelwert der Lichtimpulse immer mit dem Zeitpunkt zusammenfällt, unter dem die Zählerstände mit den Meßwerten der Maßstäbe des Koordinatenmeßgerätes gelesen werden. Die vorstehend beschriebene Hysterese bzw. der daraus resultierende geschwindigkeitsabhängige Schleppfehler ist damit vermieden.

Im gezeigten Ausführungsbeispiel ist eine analog arbeitende Regelelektronik dargestellt. Es ist jedoch klar, daß stattdessen auch eine rein digitale Regelelektronik verwendet werden kann.

Die Regeleinrichtung kann auch so aufgebaut sein, daß sie eine erste Spannung erzeugt, die der Zeitdauer der zu erzeugenden Pulse proportional ist, und zwei zu einer zweiten Spannung symmetrische, zeit-lineare Spannungen erzeugt, deren Frequenz mit dem Maschinentakt (CLK) bzw. dem Auslesetakt der Empfängerzeile synchronisiert ist, und daß die Regeleinrichtung weiterhin eine Komparatorstufe enthält, der die symmetrischen, zeit-linearen Spannungen und die erste Spannung zugeführt sind, und die aus dem Vergleich der Spannungen Signale liefert, die den Anfangs- und den Endzeitpunkt für die Pulse variabler Dauer bestimmen.

## Patentansprüche

1. Verfahren zur Regelung der Emissionslichtmenge der Strahlquelle in einem optischen Tastkopf, dadurch gekennzeichnet, daß die Strahlquelle (2) gepulst betrieben wird und die Anpassung der Lichtmenge an die Oberflächenbeschaffenheit der auszumessenden Probe (5) durch Steuerung der Pulsdauer (a) erfolgt.

2. Verfahren nach Anspruch 1, dadurch gekennzeichnet, daß bei einem Tastkopf (1), der in Verbindung mit einem Koordinatenmeßgerät (6) betrieben wird, die Pulsfrequenz mit dem Zeittakt (CLK) des Koordinatenmeßgerätes synchronisiert wird.

3. Verfahren nach Anspruch 2, dadurch gekennzeichnet, daß die Synchronisation derart vorgenommen wird, daß die Mitte bzw. die Schwerpunkte der Einzelpulse (Uₚ) der Strahlquelle (2) in konstanter Phasenbeziehung zum Zeittakt (CLK) des Koordinatenmeßgerätes (6) stehen.

4. Verfahren nach Anspruch 2, dadurch gekennzeichnet, daß der Tastkopf (1) eine Diodenzeile (4) als Empfänger enthält und der Auslesetakt (U_{L}) der Diodenzeile ebenfalls mit dem Zeittakt (CLK) des Koordinatenmeßgerätes synchronisiert ist.

5. Optischer Tastkopf (1) zur Durchführung des Verfahrens nach einem der Ansprüche 1-4 enthaltend eine Strahlquelle (2), einen photoempfindlichen Empfänger (4) und eine Einrichtung (20) zur Regelung der emittierten Lichtmenge der Strahlquelle (2) abhängig von der Oberflächenbeschaffenheit der auszumessenden Probe (5), wobei die Strahlquelle (2) ein Laser und der Empfänger (4) eine aus einer Vielzahl von nebeneinanderliegenden Einzelelementen bestehende Empfängerzeile (4) ist, dadurch gekennzeichnet, daß die Regeleinrichtung (20) Pulse (Uₚ) mit variabler Pulsdauer (a) liefert.

6. Optischer Tastkopf nach Anspruch 5, dadurch gekennzeichnet, daß der Tastkopf (1) an einem Koordinatenmeßgerät (6) befestigt ist und die Pulsfolge (Uₚ) der Regeleinrichtung (20) mit dem Maschinentakt (CLK) des Koordinatenmeßgerätes (6) synchronisiert ist.

7. Optischer Tastkopf nach Anspruch 5, dadurch gekennzeichnet, daß die Pulsfolge (Uₚ) der Regeleinrichtung (20) mit dem Auslesetakt (U_{L}) der Empfängerzeile (4) synchronisiert ist.

8. Optischer Tastkopf nach Anspruch 5, dadurch gekennzeichnet, daß die Intensität der von der Strahlquelle (2) ausgehenden Lichtimpulse konstant ist.

9. Optischer Tastkopf nach Anspruch 6 oder 7, dadurch gekennzeichnet, daß die Pulsfolge (U_{P}) der Regeleinrichtung (20) so mit dem Maschinentakt (CLK) bzw. dem Auslesetakt (U_{L}) der Empfängerzeile (4) synchronisiert ist, daß die Phasenbeziehung zwischen den Schwerpunkten bzw. der Mitte der Einzelimpulse der Strahlquelle (2) und der Taktfrequenz (CLK) unabhängig von der Pulslänge (a) konstant ist.

10. Optischer Tastkopf nach Anspruch 9, dadurch gekennzeichnet, daß die Regeleinrichtung (2) zu einer Referenzspannung (U_{O}) symmetrische Spannungen (- Uₛₜₑₗₗ, + Uₛₜₑₗₗ) erzeugt, deren Werte der Zeitdauer der zu erzeugenden Pulse proportional sind, daß die Einrichtung (20) eine zeitlineare ansteigende Spannungsfolge (U_{S}) erzeugt, die mit dem Maschinentakt (CLK) bzw. dem Auslesetakt (U_{L}) der Empfängerzeile (4) synchronisiert ist, und daß die Regeleinrichtung (20) weiterhin eine Komparatorstufe (16/17) enhält, der die symmetrischen Spannungen (- Uₛₜₑₗₗ, + Uₛₜₑₗₗ) und die zeitlineare Spannung (U_{S}) zugeführt sind und die aus dem Vergleich der Spannungen Signale liefert, die den Anfangs- und den Endzeitpunkt für die Pulse variabler Dauer bestimmen.

11. Optischer Tastkopf nach Anspruch 9, dadurch gekennzeichnet, daß die Regeleinrichtung eine erste Spannung erzeugt, die der Zeitdauer der zu erzeugenden Pulse proportional ist, und zwei zu einer zweiten Spannung symmetrische, zeitlineare Spannungen erzeugt, deren Frequenz mit dem Maschinentakt (CLK) bzw. dem Auslesetakt der Empfängerzeile synchronisiert ist, und daß die Regeleinrichtung weiterhin eine Komparatorstufe enthält, der die symmetrischen, zeit-linearen Spannungen und die erste Spannung zugeführt sind, und die aus dem Vergleich der Spannungen Signale liefert, die den Anfangs- und den Endzeitpunkt für die Pulse variabler Dauer bestimmen.

## Claims

1. A method for controlling the quantity of light emitted by a beam emitter in an optical probe head, characterized by the fact that said beam emitter (2) is driven by a train of pulses and that the quantity of light is adapted to the surface condition of the specimen (5) to be measured by controlling the width (a) of the pulses.

2. The method of claim 1, characterized by the fact that when using a probe head (1) being operated in combination with a coordinate measuring instrument (6) the frequency of said pulse train is synchronized with the system clock frequency (CLK) of said coordinate measuring instrument.

3. The method of claim 2, characterized by the fact that the synchronization is made such that the center or centroid of the individual pulses (U_{P}) of beam emitter (2) are in constant phase realtionship to the system clock frequency (CLK) of said coordinate measuring instrument (6).

4. The method of claim 2, characterized by the fact that said probe head (1) includes a receiver comprising a diode array (4) having a read-out clock frequency (U_{L}) and that said read-out clock frequency (U_{L}) is likewise synchronized with said system clock frequency (CLK) of said coordinate measuring instrument.

5. An optical probe head (1) for carrying out the method according to one of the claims 1-4 comprising: a beam emitter (2) , a photosensitive receiver (4) and a device (20) for controlling the emitted quantity of light of the beam emitter (2) in dependence upon the surface condition of the specimen (5) to be measured, wherein the beam emitter (2) is a laser and the receiver (4) is a linear detector array comprising a plurality of individual elements arranged one next to the other, characterized by the fact that the control device (20) provides pulses (U_{P}) of variable pulse width (a).

6. The optical probe head of claim 5, characterized by the fact that the probe head (1) is connected to a coordinate measuring instrument and that said pulse train (U_{P}) of said control device (20) is synchronized with said system clock frequency (CLK) of said coordinate measuring instrument.

7. The optical probe head of claim 5, characterized by the fact that said pulse train (U_{P}) of said control device (20) is synchronized with the read-out clock frequency (U_{L}) of said receiver array (4).

8. The optical probe head of claim 5, characterized by the fact that the intensity of the light pulse emitted by said beam emitter (2) is constant.

9. The optical probe head of claims 6 or 7, characterized by the fact that said pulse train (U_{P}) of the control device (20) is synchronized with said system clock frequency (CLK) such that the phase relationship between the centroids or centers of the individual pulses of said beam emitter (2) and said system clock frequency (CLK) is constant independently of said pulse width (a).

10. The optical probe head of claim 9, characterized by the fact that said control device (2) generates voltages **(-U**_{**stell**}**, +U**_{**stell**}**)** symmetrical to a reference voltage (U_{O}) having values proportional to the pulse width of the pulses to be generated, that a generator device (20) generates a voltage train U_{S} increasing linearly as a function of time, said voltage train U_{S} being synchronized with said system clock frequency (CLK) and the readout clock frequency (U_{L}) of receiver array (4); and that said control device (2) comprises a comparator (16/17) receiving said symmetrical voltages **(-U**_{**stell**}**, +U**_{**stell**}**)** and said time linear voltage (U_{S}) for comparing the same to each other to form and supply signals for determining the start time point and the finish time point for said pulses of variable width.

11. The optical probe head of claim 9, characterized by the fact that said control device generates a first voltage proportional to the pulse width of the pulses to be generated, and generates symmetrical to a second voltage two time-linear voltages the frequency of which is synchronized with said system clock frequency CLK and the receiver clock frequency, and that the control device further comprises a comparator for receiving said two time-linear voltages and said first voltage for comparing the same to each other to form and supply signals for determing the start time point and the finish time point for said pulses of variable width.

## Revendications

1. Procédé de régulation de la quantité de lumière émise par la source de rayonnement dans un palpeur optique, caractérisé en ce que l'on utilise la source de rayonnement (2) en service pulsé et l'on adapte la quantité de lumière émise à la nature de la surface de l'objet à mesurer (5) par la variation de la durée d'impulsion (a).

2. Procédé selon la revendication 1, caractérisé en ce que, dans le cas d'un palpeur (1) utilisé en combinaison avec un appareil de mesure en coordonnées (6), on synchronise la fréquence des impulsions avec le rythme de base (horloge) de l'appareil de mesure en coordonnées.

3. Procédé selon la revendication 2, caractérisé en ce que l'on effectue la synchronisation de manière que le milieu ou les "centres de gravité" des impulsions individuelles (U_{P}) de la source de rayonnement (2) soient en relation de phase constante avec le rythme de base (horloge) de l'appareil de mesure en coordonnées (6).

4. Procédé selon la revendication 2, caractérisé en ce que le palpeur (1) contient une ligne de diodes (4) comme récepteur et que le rythme de lecture (U_{L}) de la ligne de diodes est également synchronisé avec le rythme de base (horloge) de l'appareil de mesure en coordonnées.

5. Palpeur optique (1) pour la mise en oeuvre du procédé selon une des revendications 1-4, contenant une source de rayonnement (2), un récepteur photosensible (4) et un dispositif (20) pour la régulation de la quantité de lumière émise par la source de rayonnement (2) en fonction de la nature de la surface de l'objet à mesurer (5), la source de rayonnement (2) étant formée par un laser et le récepteur (4) étant formé par une ligne de réception constituée d'un grand nombre d'éléments individuels disposés les uns à côté des autres, caractérisé en ce que le dispositif de réglage (20) délivre des impulsions (U_{P}) ayant une durée d'impulsion (a) variable.

6. Palpeur optique selon la revendication 5, caractérisé en ce qu'il est fixé à un appareil de mesure en coordonnées (6) et le train d'impulsions (U_{P}) du dispositif de réglage (20) est synchronisé avec la cadence machine (horloge) de l'appareil de mesure en coordonnées (6).

7. Palpeur optique selon la revendication 5, caractérisé en ce que le train d'impulsions (U_{P}) du dispositif de réglage (20) est synchronisé avec le rythme de lectyure (U_{L}) de la ligne de réception (4).

8. Palpeur optique selon la revendication 5, caractérisé en ce que l'intensité des impulsions lumineuses issues de la source de rayonnement (2) est constante.

9. Palpeur optique selon la revendication 6 ou 7, caractérisé en ce que le train d'impulsions (U_{P}) du dispositif de réglage (20) est synchronisé avec la cadence machine (horloge) ou le rythme de lecture (U_{L}) de la ligne de réception (4), de manière que la relation de phase entre les centres de gravité ou le milieu des impulsions individuelles de la source de rayonnement et la fréquence de base (horloge) soit indépendante de la durée d'impulsion (a).

10. Palpeur optique selon la revendication 9, caractérisé en ce que le dispositif de réglage (1) génère des tensions (- Uₚᵢₗₒₜₑ, + Uₚᵢₗₒₜₑ) symétriques par rapport à une tension de référence (U_{O}), dont les valeurs sont proportionnelles à la durée des impulsions à produire, que le dispositif de réglage (20) génère une succession de tensions (U_{S}) augmentant de façon linéaire dans le temps et qui est synchronisée avec la cadence machine (horloge) ou le rythme de lecture (U_{L}) de la ligne de réception (4), et que le dispositif de réglage (20) contient en outre un étage comparateur (16/17) auquel sont appliquées les tensions symétriques (- Uₚᵢₗₒₜₑ, + Uₚᵢₗₒₜₑ) et la tension (U_{S}) variant de façon linéaire dans le temps, étage comparateur qui, à partir de la comparaison des tensions, fournit des signaux déterminant les instants du début et de la fin pour les impulsions de durée variable.

11. Palpeur optique selon la revendication 9, caractérisé en ce que le dispositif de réglage génère une première tension proportionnelle à la durée des impulsions à produire, de même que deux tensions, symétriques par rapport à une deuxième tension, qui varient de façon linéaire dans le temps et dont la fréquence est synchronisée avec la cadence machine (horloge) ou le rythme de lecture de la ligne de réception, et que le dispositif de réglage contient en outre un étage comparateur auquel sont appliquées les tensions symétriques variant linéairement dans le temps et la première tension et qui, à partir de la comparaison des tensions, fournit des signaux déterminant les instants du début et de la fin pour les impulsions de durée variable.
